(19) **Europäisches Patentamt**
**European Patent Office**
**Office européen des brevets**

(11) **EP 2 859 402 B1**

(12) **EUROPEAN PATENT SPECIFICATION**

(45) Date of publication and mention
of the grant of the patent:
**22.11.2017 Bulletin 2017/47**

(51) Int Cl.:
**G02B 27/22** (2006.01)    **F21V 8/00** (2006.01)
**G02B 27/10** (2006.01)    **H04N 13/04** (2006.01)

(21) Application number: **12877856.0**

(22) Date of filing: **01.06.2012**

(86) International application number:
**PCT/US2012/040607**

(87) International publication number:
**WO 2013/180737 (05.12.2013 Gazette 2013/49)**

(54) **DIRECTIONAL BACKLIGHT WITH A MODULATION LAYER**

DIREKTIONALE HINTERGRUNDBELEUCHTUNG MIT EINER MODULATIONSSCHICHT

RÉTROÉCLAIRAGE DIRECTIONNEL DOTÉ D'UNE COUCHE DE MODULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015 Bulletin 2015/16**

(73) Proprietor: LEIA Inc.
**Menlo Park, CA 94025 (US)**

(72) Inventors:
• **FATTAL, David, A.**
**Menio Park, CA 94025 (US)**
• **BRUG, James, A.**
**Palo Alto, California 94304-1100 (US)**

• **SANTORI, Charles, M.**
**Palo Alto, California 94304-1100 (US)**
• **FLORENTINO, Marco**
**Palo Alto, California 94304-1100 (US)**
• **PENG, Zhen**
**Menlo Park, CA 94025 (US)**

(74) Representative: **Carpmaels & Ransford LLP**
**One Southampton Row**
**London WC1B 5HA (GB)**

(56) References cited:
**US-A1- 2002 075 445    US-A1- 2008 204 873
US-A1- 2008 285 307    US-A1- 2009 244 706
US-A1- 2010 207 964    US-B1- 6 580 529
US-B1- 7 114 820**

**EP 2 859 402 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

RELATED APPLICATIONS

This application is related to PCT Patent Application Serial No. PCT/US2012/035573 (Attorney Docket No. 82963238, Publication No. WO2013/162609), entitled "Directional Pixel for Use in a Display Screen", and filed on April 27th, 2012, and to PCT Patent Application Serial No. PCT/US2012/040305 (Attorney Docket No. 83011348, Publication No. WO2013/180725), entitled "Directional Backlight", and filed on May 31st, 2012, both assigned to the assignee of the present application.

BACKGROUND

US2010/207964A1 describes a display device with an integrated backlight layer structure utilizing separate color diffractive out-couplings.

The ability to reproduce a light field in a display screen has been a key quest in imaging and display technology. A light field is the set of all light rays traveling in every direction through every point in space. Any natural, real-world scene can be fully characterized by its light field, providing information on the intensity, color, and direction of all light rays passing through the scene. The goal is to enable viewers of a display screen to experience a scene as one would experience it in person.

Currently available display screens in televisions, personal computers, laptops, and mobile devices remain largely two-dimensional and are thus not capable of accurately reproducing a light field. Three-dimensional ("3D") displays have recently emerged but suffer from inefficiencies in angular and spatial resolution in addition to providing a limited number of views. Examples include 3D displays based on holograms, parallax barriers, or lenticular lenses.

A common theme among these displays is their difficulty to generate light fields that are controlled with precision at the pixel level to achieve good image quality for a wide range of viewing angles and spatial resolutions.

BRIEF DESCRIPTION OF THE DRAWINGS

The present application discloses a directional backlight according to claim 1 and a method for generating a 3D image according to claim 8. The present application may be more fully appreciated in connection with the following detailed description taken in conjunction with the accompanying drawings, in which like reference characters refer to like parts throughout, and in which:

FIG. 1 illustrates a schematic diagram of a directional backlight in accordance with various examples;
FIGS. 2A-B illustrate example top views of a directional backlight according to FIG. 1;
FIGS. 3A-B illustrate further top views of a directional backlight according to FIG. 1;
FIG. 4 illustrates a directional backlight having a triangular shape;
FIG. 5 illustrates a directional backlight having an hexagonal shape;
FIG. 6 illustrates a directional backlight having a circular shape; and
FIG. 7 is a flowchart for generating a 3D image with a directional backlight in accordance with various examples.

DETAILED DESCRIPTION

A directional backlight with a modulation layer is disclosed. As generally used herein, a directional backlight is a layer in a display screen (e.g., an LCD display screen) that is used to provide a light field in the form of directional lightbeams. The directional lightbeams are scattered by a plurality of directional pixels in the directional backlight. Each directional lightbeam originates from a different directional pixel and has a given direction and angular spread based on characteristics of the directional pixel. This pointed directionality enables directional beams to be modulated (i.e., turned on, off or changed in brightness) using a plurality of modulators. The modulators may be, for example, Liquid Crystal Display ("LCD") cells (with or without polarizers). Other types of modulators may be used, such as those based on a different mechanism including micro-electrical-mechanical ("MEMS"), fluidic, magnetic, electrophoretic, or other mechanism that modulates the intensity of light upon application of an electrical signal.

In various examples, the directional pixels are arranged in a directional backplane that is illuminated by a plurality of input planar lightbeams. The directional pixels receive the input planar lightbeams and scatter a fraction of them into directional lightbeams. A modulation layer is placed above the directional pixels to modulate the directional lightbeams as desired. The modulation layer includes a plurality of modulators (e.g., LCD cells), with each modulator modulating a single directional lightbeam from a single directional pixel or a set of directional lightbeams from a set of directional pixels. The modulation layer enables 3D images to be generated with many different views, with each view provided by a set of directional lightbeams.

In various examples, the directional pixels in the directional backplane have patterned gratings of substantially parallel grooves arranged in or on top of the directional backplane. The directional backplane may be, for example, a slab of transparent material that guides the input planar lightbeams into the directional pixels, such as, for example, Silicon Nitride ("SiN"), glass or quartz, plastic, Indium Tin Oxide ("ITO"), among others. The patterned gratings can consist of grooves etched directly in or made of material deposited on top of the directional backplane or the waveguides (e.g., any material that can be deposited and etched or lift-off, including any dielectrics or metal). The grooves may also be slanted.

As described in more detail herein below, each directional pixel may be specified by a grating length (i.e., dimension along the propagation axis of the input planar lightbeams), a grating width (i.e., dimension across the propagation axis of the input planar lightbeams), a groove orientation, a pitch, and a duty cycle. Each directional pixel may emit a directional lightbeam with a direction that is determined by the groove orientation and the grating pitch and with an angular spread that is determined by the grating length and width. By using a duty cycle of or around 50%, the second Fourier coefficient of the patterned gratings vanishes thereby preventing the scattering of light in additional unwanted directions. This insures that only one directional lightbeam emerges from each directional pixel regardless of its output angle.

As further described in more detail herein below, a directional backlight can be designed with directional pixels that have a certain grating length, a grating width, a groove orientation, a pitch and a duty cycle that are selected to produce a given 3D image. The 3D image is generated from the directional lightbeams emitted by the directional pixels and modulated by the modulation layer, with modulated directional lightbeams from a set of directional pixels generating a given image view.

It is appreciated that, in the following description, numerous specific details are set forth to provide a thorough understanding of the embodiments. However, it is appreciated that the embodiments may be practiced without limitation to these specific details. In other instances, well known methods and structures may not be described in detail to avoid unnecessarily obscuring the description of the embodiments. Also, the embodiments may be used in combination with each other.

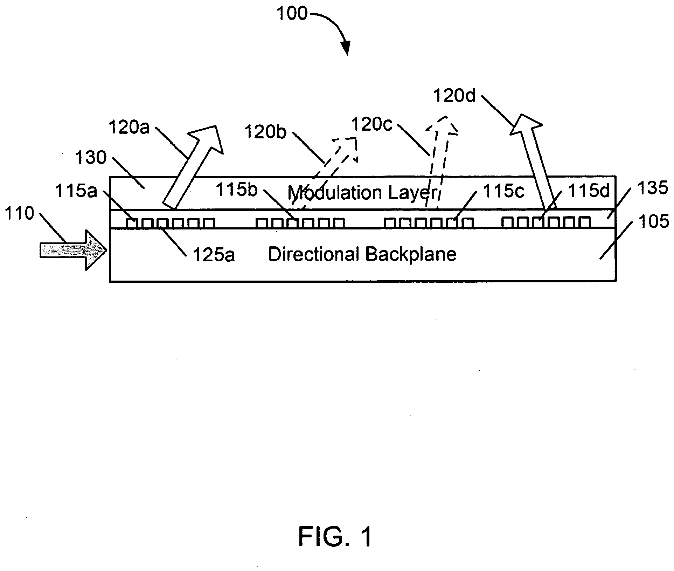

Referring now to FIG. 1, a schematic diagram of a directional backlight in accordance with various examples is described. Directional backlight 100 includes a directional backplane 105 that receives a set of input planar lightbeams 110 from a plurality of light sources. The plurality of light sources may include, for example, one or more narrow-bandwidth light sources with a spectral bandwidth of approximately 30 nm or less, such as Light Emitting Diodes ("LEDs"), lasers, and so on. The input planar lightbeams 110 propagate in substantially the same plane as the directional backplane 105, which is designed to be substantially planar.

The directional backplane 105 may consist of a slab of a transparent material (e.g., SiN, glass or quartz, plastic, ITO, etc.) having a plurality of directional pixels 115a-d arranged in or on top of the directional backplane 105. The directional pixels 115a-d scatter a fraction of the input planar lightbeams 110 into directional lightbeams 120a-d. In various examples, each directional pixel 115a-d has patterned gratings of substantially parallel grooves, e.g., grooves 125a for directional pixel 115a. The thickness of the grating grooves can be substantially the same for all grooves resulting in a substantially planar design. The grooves can be etched in the directional backplane or be made of material deposited on top of the directional backplane 105 (e.g., any material that can be deposited and etched or lift-off, including any dielectrics or metal).

Each directional lightbeam 120a-d has a given direction and an angular spread that is determined by the patterned grating forming the corresponding directional pixel 115a-d. In particular, the direction of each directional lightbeam 120a-d is determined by the orientation and the grating pitch of the patterned gratings. The angular spread of each directional lightbeam is in turn determined by the grating length and width of the patterned gratings. For example, the direction of directional lightbeam 115a is determined by the orientation and the grating pitch of patterned gratings 125a.

It is appreciated that this substantially planar design and the formation of directional lightbeams 120a-d from input planar lightbeams 110 requires gratings having a substantially smaller pitch than traditional diffraction gratings. For example, traditional diffraction gratings scatter light upon illumination with lightbeams that are propagating substantially across the plane of the grating. Here, the gratings in each directional pixel 115a-d are substantially on the same plane as the input planar lightbeams 110 when generating the directional lightbeams 120a-d.

The directional lightbeams 120a-d are precisely controlled by characteristics of the gratings in directional pixels 115a-d including a grating length $L$, a grating width $W$, a groove orientation $\theta$, and a grating pitch $\Lambda$. In particular, the grating length $L$ of grating 125a controls the angular spread $\Delta\Theta$ of the directional lightbeam 120a along the input light propagation axis and the grating width $W$ controls the angular spread $\Delta\Theta$ of the directional lightbeam 120a across the input light propagation axis, as follows:

$$\Delta\Theta \approx \frac{4\lambda}{\pi L}\left(\frac{4\lambda}{\pi W}\right) \qquad\qquad \text{(Eq. 1)}$$

where $\lambda$ is the wavelength of the directional lightbeam 120a. The groove orientation, specified by the grating orientation angle $\theta$, and the grating pitch or period, specified by $\Lambda$, control the direction of the directional lightbeam 120a.

The grating length $L$ and the grating width $W$ can vary in size in the range of 0.1 to 200 $\mu$m. The groove orientation angle $\theta$ and the grating pitch $\Lambda$ may be set to satisfy a desired direction of the directional lightbeam 120a, with, for example, the groove orientation angle $\theta$ on the order of -40 to +40 degrees and the grating pitch $\Lambda$ on the order of 200-700 nm.

In various examples, a modulation layer 130 having a plurality of modulators (e.g., LCD cells) is positioned above the directional pixels 115a-d to modulate the directional lightbeams 120a-d scattered by the directional pixels 115a-d. Modulation of directional lightbeams 120a-d involves controlling their brightness with the modulators (e.g., turning them on, off, or changing their brightness). For example, the modulators in the modulation layer 130 may be used to turn on directional lightbeams 120a and 120d and turn off directional lightbeams 120b and 120c. The ability to provide modulation for the directional lightbeams 120a-d enables many different image views to be generated.

The modulation layer 130 may be placed on top of a spacer layer 135, which may be made of a material or simply consist of a spacing (i.e., air) between the directional pixels 115a-d and the modulators the modulation layer 130. The spacer layer 135 may have a width, for example, on the order of 0-100 $\mu$m.

It is appreciated that directional backplane 105 is shown with four directional pixels 115a-d for illustration purposes only. A directional backplane in accordance with various examples can be designed with many directional pixels (e.g., higher than 100), depending on how the directional backplane is used (e.g., in a 3D display screen, in a 3D watch, in a mobile device, etc.). It is also appreciated that the directional pixels may have any shape, including for example, a circle, an ellipse, a polygon, or other geometrical shape.

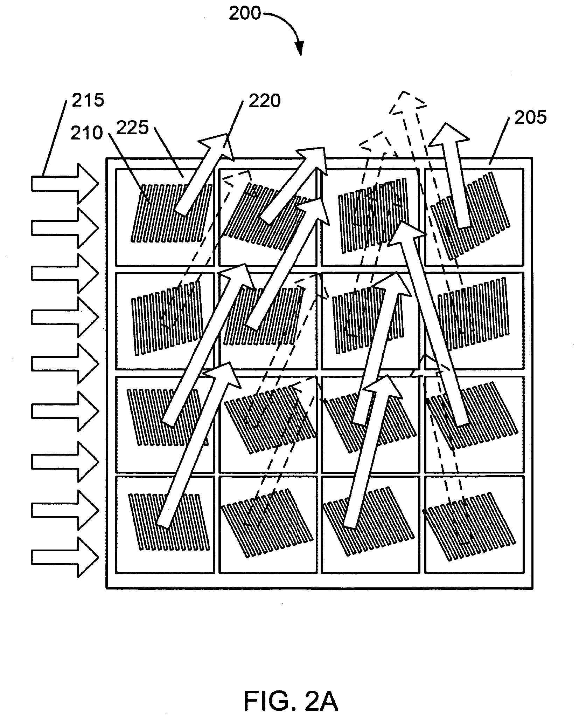

Attention is now directed to FIGS. 2A-B, which illustrate top views of a directional backlight according to FIG. 1. In FIG. 2A, directional backlight 200 is show with a directional backplane 205 consisting of a plurality of polygonal directional pixels (e.g., directional pixel 210) arranged in a transparent slab. Each directional pixel is able to scatter a portion of the input planar lightbeams 215 into an output directional lightbeam (e.g., directional lightbeam 220). Each directional lightbeam is modulated by a modulator, e.g., LCD cell 225 for directional lightbeam 220. The directional lightbeams scattered by all the directional pixels in the directional backplane 205 and modulated by the modulators (e.g., LCD cell 225) can represent multiple image views that when combined form a 3D image.

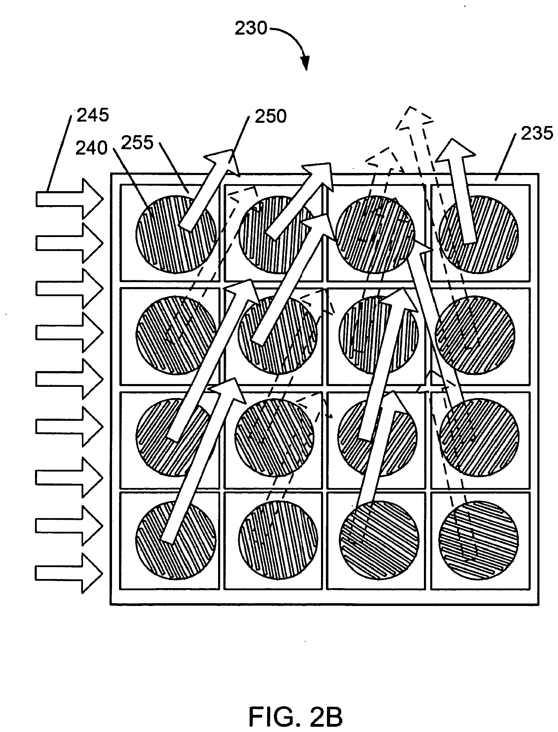

Similarly, in FIG. 2B, directional backlight 230 is show with a directional backplane 235 consisting of a plurality of circular directional pixels (e.g., directional pixel 240) arranged in a transparent slab. Each directional pixel is able to scatter a portion of the input planar lightbeams 245 into an output directional lightbeam (e.g., directional lightbeam 250). Each directional lightbeam is modulated by a modulator, e.g., LCD cell 255 for directional lightbeam 250. The directional lightbeams scattered by all the directional pixels in the directional backplane 235 and modulated by the modulators (e.g., LCD cell 255) can represent multiple image views that when combined form a 3D image.

In various examples, a single modulator may be used to modulate a set of directional lightbeams from a set of directional pixels. That is, a given modulator may be placed above a set of directional pixels instead of having a single modulator per directional pixel as shown in FIGS. 2A-B.

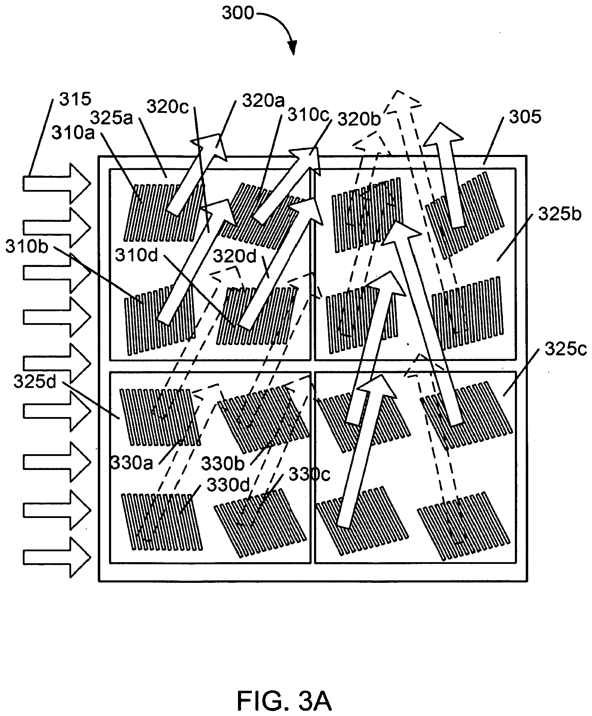

Referring now to FIGS. 3A-B, top views of a directional backlight according to FIG. 1 are described. In FIG. 3A, directional backlight 300 is show with a directional backplane 305 consisting of a plurality of polygonal directional pixels (e.g., directional pixel 310a) arranged in a transparent slab. Each directional pixel is able to scatter a portion of the input planar lightbeams 315 into an output directional lightbeam (e.g., directional lightbeam 320a). A set of directional lightbeams (e.g., directional lightbeams 320a-d scattered by directional pixels 310a-d) is modulated by a modulator (e.g., LCD cell 325a to modulate directional lightbeams 320a-d). For example, LCD cell 325a is used to turn on directional pixels 310a-d while LCD cell 325d is used to turn off directional pixels 330a-d. The directional lightbeams scattered by all the directional pixels in the directional backplane 305 and modulated by the LCD cells 325a-d can represent multiple image views that when combined form a 3D image.

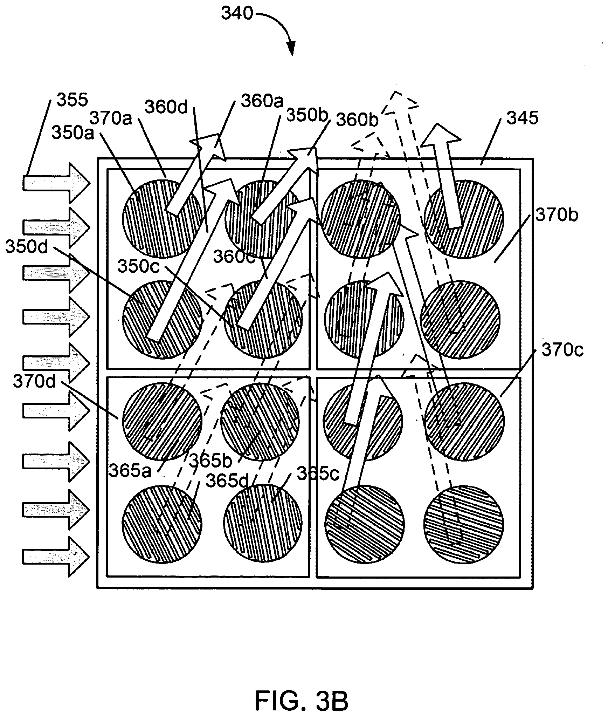

Similarly, in FIG. 3B, directional backlight 340 is show with a directional backplane 345 consisting of a plurality of circular directional pixels (e.g., directional pixel 350a) arranged in a transparent slab. Each directional pixel is able to scatter a portion of the input planar lightbeams 355 into an output directional lightbeam (e.g., directional lightbeam 360a). A set of directional lightbeams (e.g., directional lightbeams 360a-d scattered by directional pixels 350a-d) is modulated by a modulator (e.g., LCD cell 370a to modulate directional lightbeams 360a-d). For example, LCD cell 370a is used to turn on directional pixels 350a-d while LCD cell 370d is used to turn off directional pixels 365a-d. The directional lightbeams scattered by all the directional pixels in the directional backplane 345 and modulated by modulators such as the LCD cells 370a-d can represent multiple image views that when combined form a 3D image.

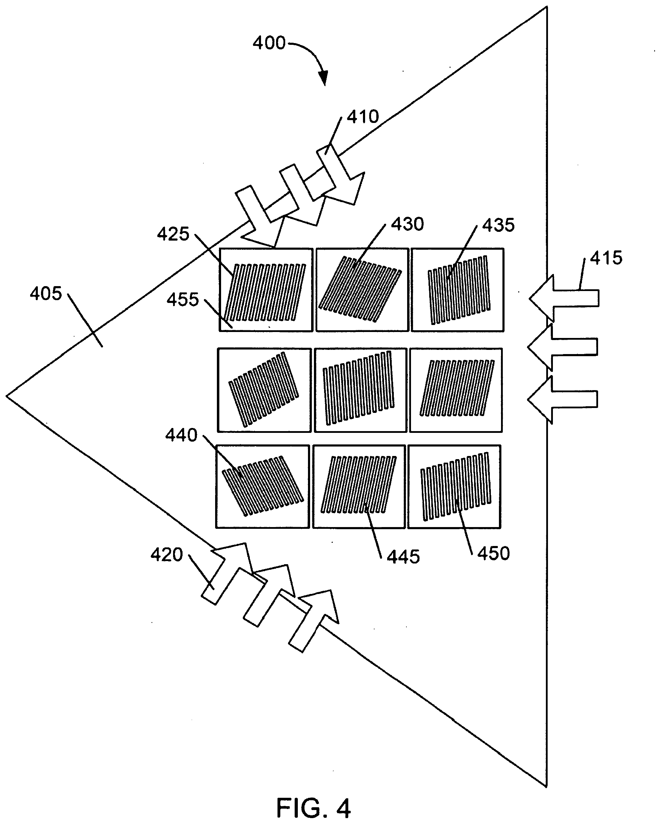

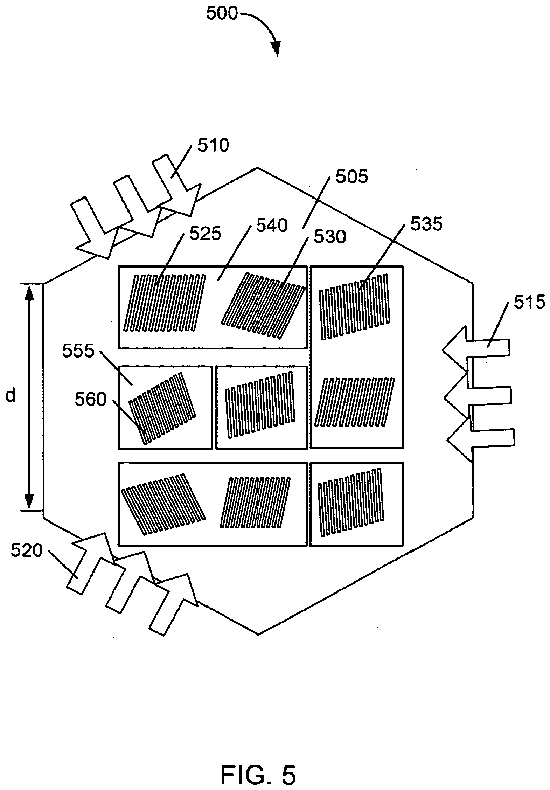

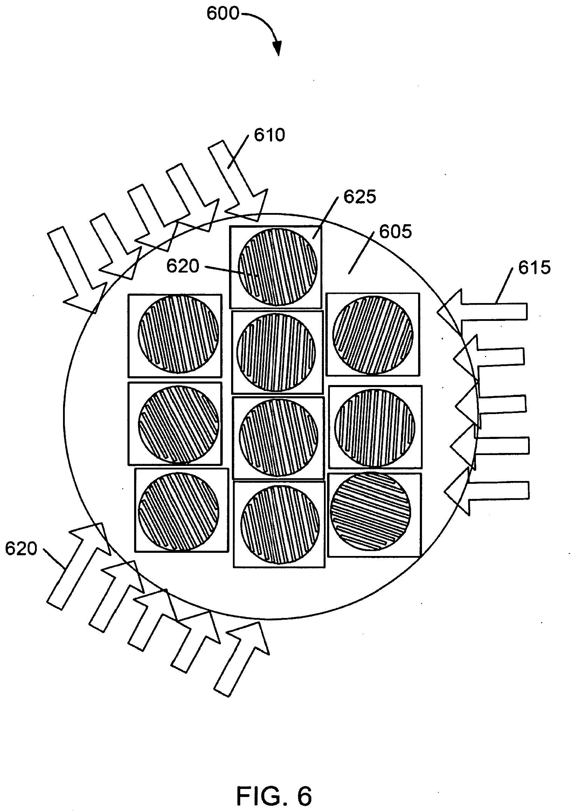

It is appreciated that a directional backplane may be designed to have different shapes, such as, for example, a triangular shape (as shown in FIG. 4), a hexagonal shape (as shown in FIG. 5), or a circular shape (as shown in FIG. 6). In FIG. 4, the directional backplane 405 receives input planar lightbeams from three different spatial directions, e.g., input planar lightbeams 410-420. This configuration may be used when the input planar lightbeams represent light of different colors, e.g., with input planar lightbeams 410 representing a red color, input planar lightbeams 415 representing a green color, and input planar lightbeams 420 representing a blue color. Each of the input planar lightbeams 410-420 is disposed on a side of the triangular directional backplane 405 to focus their light on a set of directional pixels. For example, the input planar lightbeams 410 is scattered into directional lightbeams by a set of directional pixels 425-435. This subset of directional pixels 425-435 may also receive light from the input planar lightbeams 415-420. However, by design this light is not scattered in the intended view zone of the directional backlight 400.

For example, suppose that input planar lightbeams 410 are scattered by a subset $G_A$ of directional pixels 425-435 into an intended view zone. The intended view zone may be specified by a maximum ray angle $\theta_{max}$ measured from a normal to the directional backlight 400. Input planar lightbeams 410 may also be scattered by a subset of directional pixels $G_B$ 440-450, however those unwanted rays are outside the intended view zone as long as:

$$\sin \theta_{max} \le \frac{\lambda_A + \lambda_B}{\lambda_A \lambda_B} \sqrt{\left(\frac{n_{eff}^A}{\lambda_A}\right)^2 + \left(\frac{n_{eff}^B}{\lambda_B}\right)^2 - \left(\frac{n_{eff}^A}{\lambda_A}\right)\left(\frac{n_{eff}^B}{\lambda_B}\right)} \qquad \text{(Eq. 2)}$$

where $\lambda_A$ is the wavelength of input planar lightbeams 410, $n_{eff}^A$ is the effective index of horizontal propagation of input planar lightbeams 410 in the directional backplane 405, $\lambda_B$ is the wavelength of input planar lightbeams 420 (to be scattered by directional pixels 440-450), and $n_{eff}^B$ is the effective index of horizontal propagation of input planar lightbeams 420 in the directional backplane 405. In case where the effective indices and wavelengths are substantially the same, Equation 2 reduces to:

$$\sin \theta_{max} \le \frac{n_{eff}}{2} \qquad \text{(Eq. 3)}$$

For a directional backplane of refractive index $n$ above 2 with input planar lightbeams propagating near the grazing angle, it is seen that the intended view zone of the display can be extended to the whole space ($n_{eff} \ge 2$ and $\sin\theta_{max} \sim 1$). For a directional backplane of lower index such as glass (e.g., n = 1.46), the intended view zone is limited to about $\theta_{max}$ < arcsin(n/2) ($\pm 45°$ for glass).

It is appreciated that each directional lightbeam may be modulated by a modulator, such as, for example, LCD cell 455. Since precise directional and angular control of directional lightbeams can be achieved with each directional pixel in the directional backplane 405 and the directional lightbeams can be modulated by modulators such as LCD cells, the directional backlight 405 can be designed to generate many different views of 3D images.

It is further appreciated that the directional backplane 405 shown in FIG. 4 may be shaped into a more compact design by realizing that the extremities of the triangular slab can be cut to form a hexagonal shape, as shown in FIG. 5. The directional backplane 505 receives input planar lightbeams from three different spatial directions, e.g., input planar lightbeams 510-520. Each of the input planar lightbeams 510-520 is disposed on alternating sides of the hexagonal directional backplane 505 to focus its light on a subset of directional pixels (e.g., directional pixels 525-535). In various examples, the hexagonal directional backplane 505 has a side length that may range in the order of 10-30 mm, with a directional pixel size in the order of 10-30 $\mu$m.

It is appreciated that directional backlight 500 is shown with multiple configurations of modulators. For example, a single modulator may be used to modulate directional lightbeams from a set of directional pixels, e.g., LCD cell 540 for directional pixels 525-535, or a single modulator may be used to modulate a single directional pixel, e.g., LCD cell 555 for directional pixel 560. One skilled in the art appreciates that any configuration of modulators for use with directional pixels may be used to modulate directional lightbeams scattered by the directional pixels.

It is also appreciated that the directional backlight for use with color input planar lightbeams can have any geometrical shape besides a triangular (FIG. 4) or hexagonal shape (FIG. 5) as long as light from three primary colors is brought from three different directions. For example, the directional backlight may be a polygon, a circle, an ellipse, or another shape able to receive light from three different directions. Referring now to FIG. 6, a directional backlight having a circular shape is described. Directional backplane 605 in directional backlight 600 receives input planar lightbeams 610-620 from three different directions. Each directional pixel has a circular shape, e.g., directional pixel 620, and scatters a directional lightbeam that is modulated by a modulator, e.g., LCD cell 625. Each LCD cell has a rectangular shape and the circular directional backplane 605 is designed to accommodate the rectangular LCD cells for the circular directional pixels (or for polygonal directional pixels if desired).

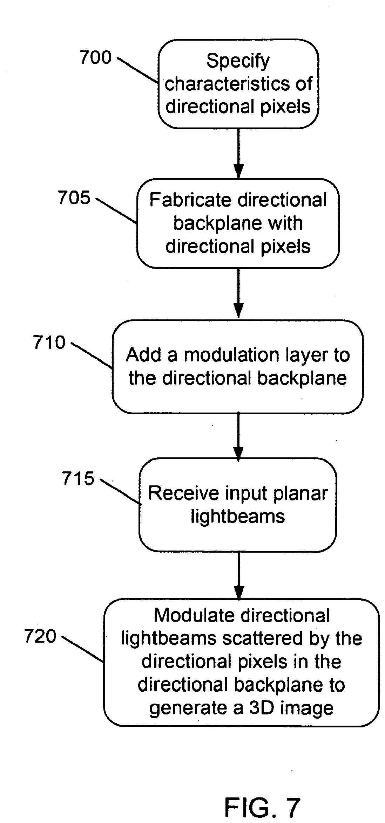

A flowchart for generating a 3D image with a directional backlight in accordance with the present application is illustrated in FIG. 7. First, the characteristics of the directional pixels of the directional backlight are specified (700). The characteristics may include characteristics of the patterned gratings in the directional pixels, such as, for example, a grating length, a grating width, an orientation, a pitch, and a duty cycle. As described above, each directional pixel in the directional backlight can be specified with a given set of characteristics to generate a directional lightbeam having a direction and an angular spread that is precisely controlled according to the characteristics.

Next, a directional backplane with directional pixels is fabricated (705). The directional backplane is made of a transparent material and may be fabricated with any suitable fabrication technique, such as, for example, optical lithography, nano-imprint lithography, roll-to-roll imprint lithography, direct embossing with an imprint mold, among others. The directional pixels may be etched in the directional backplane or be made of patterned gratings with material deposited on top of the directional backplane (e.g., any material that can be deposited and etched or lift-off, including any dielectrics or metal).

A modulation layer (e.g., an LCD-based modulation layer) is then added to the directional backplane (710). The modulation layer includes a plurality of modulators (e.g., LCD cells) that are placed on top of a spacer layer (as shown in FIG. 1) above the directional backplane. As described above, the modulation layer may be designed to have a single modulator for a single directional pixel or a single modulator for a set of directional pixels. As further described above, the directional backplane (and the directional pixels) may have different shapes (e.g., polygon, triangular, hexagonal, circular, etc.) to accommodate the modulation layer made of rectangular shaped modulators.

Light from a plurality of narrow-bandwidth light sources is input into the directional backplane in the form of input planar lightbeams (715). Lastly, a 3D image is generated from the modulated directional lightbeams that are scattered by the directional pixels in the directional backplane (720).

Advantageously, the precise control that is achieved with the directional pixels and modulation in the directional backlight enables a 3D image to be generated with an easy to fabricate substantially planar structure. Different configurations of directional pixels generate different 3D images. In addition, the directional lightbeams generated by the directional pixels can be modulated to produce any desired effect in the generated images. The directional backlights described herein can be used to provide 3D images in display screens (e.g., in TVs, mobile devices, tablets, video game devices, and so on) as well as in other applications, such as, for example, 3D watches, 3D art devices, 3D medical devices, among others.

It is appreciated that the previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the scope of the claims.

## Claims

1. A directional backlight (100, 200, 230, 300, 340, 400, 500, 600), comprising:

   a directional backplane (125a, 205, 235,305, 345, 405, 505, 605) having a plurality of directional pixels (115a-d, 210, 240, 350a-d, 425-435, 525-535, 620) to scatter a plurality of input planar lightbeams (110, 215,245, 315, 355, 410-420, 510-520, 610-620) into a plurality of directional lightbeams (120a-d, 220, 250, 320a-d, 360a-d), each directional lightbeam having a direction and an angular spread controlled by characteristics of a directional pixel of the plurality of directional pixels; and
   a modulation layer (130) having a plurality of modulators (225, 255, 325a-d, 370a-d, 455, 555, 625) to modulate the plurality of directional lightbeams,
   wherein the plurality of directional pixels and plurality of modulators are configured such that the directional lightbeams scattered by the directional pixels and modulated by the modulators represent multiple image views that when combined form a 3D image.

2. The directional backlight of claim 1, further comprising a spacer layer (135) between the directional backplane and the modulation layer.

3. The directional backlight of claim 1, wherein the directional backplane is substantially planar.

4. The directional backlight of claim 1, wherein each directional pixel in the plurality of directional pixels comprises patterned gratings with a plurality of substantially parallel grooves.

5. The directional backlight of claim 1, wherein the directional backplane comprises one of a polygonal slab of transparent material and circular slab of transparent material.

6. The directional backlight of claim 1, wherein the plurality of directional pixels comprises a plurality of polygonal directional pixels.

7. The directional backlight of claim 1, wherein the plurality of directional pixels comprises a plurality of circular directional pixels.

8. A method for generating a 3D image with a directional backlight having a modulation layer, comprising:

illuminating the directional backplane with a plurality of input planar lightbeams (715), the input planar lightbeams scattered by a plurality of directional pixels into a plurality of directional lightbeams, a directional pixel of the plurality of directional pixels comprising a patterned grating having substantially parallel grooves; and
modulating the plurality of directional lightbeams with a plurality of modulators of the modulation layer to generate multiple views of a 3D image (720),
wherein each directional lightbeam is controlled by characteristics of a directional pixel.

9. The directional backlight of claim 5 or the method of claim 8, wherein the characteristics of a directional pixel comprise a grating length, a grating width, a grating orientation, a grating pitch, and a duty cycle.

10. The directional backlight or the method of claim 9, wherein the grating pitch and the grating orientation control the direction of a directional lightbeam scattered by the directional pixel.

11. The directional backlight or method of claim 9, wherein the grating length and the grating width control the angular spread of a directional lightbeam scattered by the directional pixel.

12. The directional backlight of claim 1 or the method of claim 8, wherein a single modulator from the plurality of modulators modulates a directional lightbeam from a single directional pixel.

13. The directional backlight of claim 1 or the method of claim 8, wherein a single modulator from the plurality of modulators modulates directional lightbeams from a set of directional pixels.

14. The directional backlight of claim 1 or the method of claim 8, wherein the modulation layer comprises an LCD-based modulation layer and the plurality of modulators comprises a plurality of LCD cells.

15. The method of claim 8, further comprising:

fabricating the directional backplane with the plurality of directional pixels arranged thereon;
adding the modulation layer above the directional backplane.

**Patentansprüche**

1. Gerichtete Hintergrundbeleuchtung (100, 200, 230, 300, 340, 400, 500, 600), die Folgendes aufweist:

eine gerichtete Busplatine (125a, 205, 235, 305, 345, 405, 505, 605), die mehrere gerichtete Pixel (115a-d, 210, 240, 350a-d, 425-435, 525-535, 620) zum Streuen mehrerer eintretender flächiger Lichtstrahlen (110, 215, 245, 315, 355, 410-420, 510-520, 610-620) in mehrere gerichtete Lichtstrahlen (120a-d, 220, 250, 320a-d, 360a-d) aufweist, wobei jeder gerichtete Lichtstrahl eine Richtung und einen Abstrahlwinkel, die von Charakteristiken eines gerichteten Pixels der mehreren gerichteten Pixel gesteuert werden, aufweist; und
eine Modulationsschicht (130), die mehrere Modulatoren (225, 255, 325a-d, 370a-d, 455, 555, 625) aufweist, um die mehreren gerichteten Lichtstrahlen zu modulieren,
wobei die mehreren gerichteten Pixel und die mehreren Modulatoren derart ausgelegt sind, dass die gerichteten Lichtstrahlen, die durch die gerichteten Pixel gestreut und durch die Modulatoren moduliert werden, mehrere Bildansichten darstellen, die bei Kombination ein 3D-Bild erzeugen.

2. Gerichtete Hintergrundbeleuchtung nach Anspruch 1, die ferner eine Abstandsschicht (135) zwischen der gerichteten Busplatine und der Modulationsschicht aufweist.

**3.** Gerichtete Hintergrundbeleuchtung nach Anspruch 1, wobei die gerichtete Busplatine im Wesentlichen planar ist.

**4.** Gerichtete Hintergrundbeleuchtung nach Anspruch 1, wobei jedes gerichtete Pixel der mehreren gerichteten Pixel gemusterte Beugungsgitter, die mehrere im Wesentlichen parallele Rillen aufweisen, aufweist.

**5.** Gerichtete Hintergrundbeleuchtung nach Anspruch 1, wobei die gerichtete Busplatine eine mehreckige Platte aus transparentem Material oder eine kreisförmige Platte aus transparentem Material aufweist.

**6.** Gerichtete Hintergrundbeleuchtung nach Anspruch 1, wobei die mehreren gerichteten Pixel mehrere mehreckige gerichtete Pixel aufweisen.

**7.** Gerichtete Hintergrundbeleuchtung nach Anspruch 1, wobei die mehreren gerichteten Pixel mehrere kreisförmige gerichtete Pixel aufweisen.

**8.** Verfahren zum Erzeugen eines 3D-Bildes mit einer gerichteten Hintergrundbeleuchtung, die eine Modulationsschicht aufweist, wobei das Verfahren Folgendes aufweist:

Beleuchten der gerichteten Busplatine mit mehreren eintretenden flächigen Lichtstrahlen (715), wobei die eintretenden flächigen Lichtstrahlen durch mehrere gerichtete Pixel in mehrere gerichtete Lichtstrahlen gestreut werden, wobei ein gerichtetes Pixel der mehreren gerichteten Pixel ein gemustertes Beugungsgitter mit im Wesentlichen parallelen Rillen aufweist; und
Modulieren der mehreren gerichteten Lichtstrahlen mit mehreren Modulatoren der Modulationsschicht, um mehrere Bildansichten eines 3D-Bildes (720) zu erzeugen,
wobei jeder gerichtete Lichtstrahl von Charakteristiken eines gerichteten Pixels gesteuert wird.

**9.** Gerichtete Hintergrundbeleuchtung nach Anspruch 5 oder Verfahren nach Anspruch 8, wobei die Charakteristiken eines gerichteten Pixels eine Gitterlänge, eine Gitterbreite, eine Gitterausrichtung, einen Gitterabstand und einen Betriebszyklus aufweisen.

**10.** Gerichtete Hintergrundbeleuchtung oder Verfahren nach Anspruch 9, wobei der Gitterabstand und die Gitterausrichtung die Richtung eines gerichteten Lichtstrahls, der durch das gerichtete Pixel gestreut wird, steuern.

**11.** Gerichtete Hintergrundbeleuchtung oder Verfahren nach Anspruch 9, wobei die Gitterlänge und die Gitterbreite den Abstrahlwinkel eines gerichteten Lichtstrahls, der durch das gerichtete Pixel gestreut wird, steuern.

**12.** Gerichtete Hintergrundbeleuchtung nach Anspruch 1 oder Verfahren nach Anspruch 8, wobei ein einzelner Modulator der mehreren Modulatoren einen gerichteten Lichtstrahl aus einem einzelnen gerichteten Pixel moduliert.

**13.** Gerichtete Hintergrundbeleuchtung nach Anspruch 1 oder Verfahren nach Anspruch 8, wobei ein einzelner Modulator der mehreren Modulatoren gerichtete Lichtstrahlen aus einem Satz gerichteter Pixel moduliert.

**14.** Gerichtete Hintergrundbeleuchtung nach Anspruch 1 oder Verfahren nach Anspruch 8, wobei die Modulationsschicht eine Modulationsschicht auf LCD-Basis aufweist und die mehreren Modulatoren mehrere LCD-Zellen aufweisen.

**15.** Verfahren nach Anspruch 8, das ferner Folgendes aufweist:

Herstellen der gerichteten Busplatine, auf der die mehreren gerichteten Pixel angeordnet sind;
Hinzufügen der Modulationsschicht über der gerichteten Busplatine.

**Revendications**

**1.** Rétroéclairage directionnel (100, 200, 230, 300, 340, 400, 500, 600), comprenant :

un fond de panier directionnel (125a, 205, 235, 305, 345, 405, 505, 605) ayant une pluralité de pixels directionnels (115a à 115d, 210, 240, 350a à 350d, 425 à 435, 525 à 535, 620) pour disperser une pluralité de faisceaux de lumière d'entrée plans (110, 215, 245, 315, 355, 410 à 420, 510 à 520, 610 à 620) en une pluralité de faisceaux de lumière directionnels (120a à 120d, 220, 250, 320a à 320d, 360a à 360d), chaque faisceau de lumière directionnel ayant une direction et une propagation angulaire régulées par des caractéristiques d'un pixel directionnel de la pluralité de pixels directionnels ; et

une couche de modulation (130) ayant une pluralité de modulateurs (225, 255, 325a à 325d, 370a à 370d, 455, 555, 625) pour moduler la pluralité de faisceaux de lumière directionnels,

dans lequel la pluralité de pixels directionnels et la pluralité de modulateurs sont configurés de telle sorte que les faisceaux de lumière directionnels dispersés par les pixels directionnels et modulés par les modulateurs représentent de multiples vues d'image qui, lorsqu'elles sont combinées, forment une image 3D.

2. Rétroéclairage directionnel selon la revendication 1, comprenant en outre une couche d'espacement (135) entre le fond de panier directionnel et la couche de modulation.

3. Rétroéclairage directionnel selon la revendication 1, dans lequel le fond de panier directionnel est sensiblement plan.

4. Rétroéclairage directionnel selon la revendication 1, dans lequel chaque pixel directionnel de la pluralité de pixels directionnels comprend des réseaux à motifs ayant une pluralité de rainures sensiblement parallèles.

5. Rétroéclairage directionnel selon la revendication 1, dans lequel le fond de panier directionnel comprend soit un bloc polygonal de matériau transparent, soit un bloc circulaire de matériau transparent.

6. Rétroéclairage directionnel selon la revendication 1, dans lequel la pluralité de pixels directionnels comprend une pluralité de pixels directionnels polygonaux.

7. Rétroéclairage directionnel selon la revendication 1, dans lequel la pluralité de pixels directionnels comprend une pluralité de pixels directionnels circulaires.

8. Procédé pour générer une image 3D avec un rétroéclairage directionnel ayant une couche de modulation, consistant :

à éclairer le fond de panier directionnel avec une pluralité de faisceaux de lumière d'entrée plans (715), les faisceaux de lumière d'entrée plans étant dispersés par une pluralité de pixels directionnels en une pluralité de faisceaux de lumière directionnels, un pixel directionnel de la pluralité de pixels directionnels comprenant un réseau à motifs ayant des rainures sensiblement parallèles ; et

à moduler la pluralité de faisceaux de lumière directionnels avec une pluralité de modulateurs de la couche de modulation pour générer de multiples vues d'une image 3D (720),

dans lequel chaque faisceau de lumière directionnel est régulé par des caractéristiques d'un pixel directionnel.

9. Rétroéclairage directionnel selon la revendication 5 ou procédé selon la revendication 8, dans lequel les caractéristiques d'un pixel directionnel comprennent une longueur de réseau, une largeur de réseau, une orientation de réseau, un pas de réseau et un cycle de service.

10. Rétroéclairage directionnel ou procédé selon la revendication 9, dans lequel le pas de réseau et l'orientation de réseau régulent la direction d'un faisceau de lumière directionnel dispersé par le pixel directionnel.

11. Rétroéclairage directionnel ou procédé selon la revendication 9, dans lequel la longueur de réseau et la largeur de réseau régulent la dispersion angulaire d'un faisceau de lumière directionnel dispersé par le pixel directionnel.

12. Rétroéclairage directionnel selon la revendication 1 ou procédé selon la revendication 8, dans lequel un seul modulateur parmi la pluralité de modulateurs module un faisceau de lumière directionnel provenant d'un seul pixel directionnel.

13. Rétroéclairage directionnel selon la revendication 1 ou procédé selon la revendication 8, dans lequel un seul modulateur parmi la pluralité de modulateurs module des faisceaux de lumière directionnels provenant d'un ensemble de pixels directionnels.

14. Rétroéclairage directionnel selon la revendication 1 ou procédé selon la revendication 8, dans lequel la couche de modulation comprend une couche de modulation à base de LCD et la pluralité de modulateurs comprend une pluralité de cellules LCD.

15. Procédé selon la revendication 8, consistant en outre :

à fabriquer le fond de panier directionnel sur lequel sont disposés la pluralité de pixels directionnels ;
à ajouter la couche de modulation au-dessus du fond de panier directionnel.

FIG. 1

FIG. 2A

FIG. 2B

**FIG. 3A**

FIG. 3B

FIG. 4

FIG. 5

FIG. 6

700 — Specify characteristics of directional pixels

705 — Fabricate directional backplane with directional pixels

710 — Add a modulation layer to the directional backplane

715 — Receive input planar lightbeams

720 — Modulate directional lightbeams scattered by the directional pixels in the directional backplane to generate a 3D image

FIG. 7

**EP 2 859 402 B1**

## REFERENCES CITED IN THE DESCRIPTION

**Patent documents cited in the description**

- US 2012035573 W
- WO 2013162609 A
- US 2012040305 W
- WO 2013180725 A
- US 2010207964 A1